# EUROPEAN PATENT SPECIFICATION

(11) **EP 2 772 975 B1**
(45) Date of publication and mention of the grant of the patent: **02.11.2016**
(21) Application number: 12843233.3
(22) Date of filing: 28.09.2012
(51) Int. Cl.: H01M 8/04, F23N 5/12, H01M 8/06

(54) **FUEL CELL SYSTEM AND METHOD OF OPERATING SAME**
BRENNSTOFFZELLENSYSTEM UND BETRIEBSVERFAHREN DAFÜR
SYSTÈME DE PILE À COMBUSTIBLE ET SON PROCÉDÉ DE FONCTIONNEMENT

(30) Priority: 24.10.2011 JP 2011232426
(43) Date of publication of application: 03.09.2014
(73) Proprietor: Panasonic Corporation, Kadoma-shi, Osaka 571-8501 (JP)
(72) Inventor: TSUYUGUCHI, Kouhei, Osaka 540-6207 (JP); OE, Jun, Osaka 540-6207 (JP); NAKAMURA, Akinari, Osaka 540-6207 (JP); OGURA, Hiroki, Osaka 540-6207 (JP); URATA, Takayuki, Osaka 540-6207 (JP)
(74) Representative: Grünecker Patent- und Rechtsanwälte PartG mbB
(86) International application number: PCT/JP2012/006238
(87) International publication number: WO 2013/061513

(56) References cited:
- EP-A1- 1 315 224
- EP-A1- 1 386 882
- JP-A- 2003 335 502
- JP-A- 2005 019 032
- JP-A- 2006 213 565
- JP-A- 2008 159 517
- JP-A- 2011 076 943
- US-A1- 2010 062 294

## Description

### Technical Field

The present invention relates to a fuel cell system including a fuel cell configured to cause a fuel gas and an oxidizing gas to react with each other to generate electric power and a method of operating the fuel cell system.

### Background Art

EP 1. 386 882 A1 discloses a fuel cell system comprising a steam reformer; a combustor configured to combust an off fuel gas, discharged from the fuel cell, to heat the hydrogen generator, the combustor including a burner configured to emit flame, a controller configured to store a target change rate used when changing an electric power generation amount of the fuel cell and control the electric power generation amount of the fuel cell based on the target change rate; and a flame detector configured to detect a combustion state of the combustor based on a conductivity of the flame.

US 2010/062294 A1 refers to a hydrogen generator and a fuel cel system.

EP 1 315 224 A1 describes a fuel cell power generator.

When generating electric power by a fuel cell system, typically, a raw material gas containing a hydrocarbon gas is reformed into a hydrogen-rich fuel gas by a hydrogen generator, and the hydrogen-rich fuel gas is supplied to a fuel cell. This reforming in the hydrogen generator is performed by a catalyst reaction. This catalyst reaction is an endothermic reaction and requires a certain amount of heat energy. Therefore, the fuel cell system includes a combustor configured to heat the hydrogen generator. A reacted fuel gas (off gas) discharged from the fuel cell and air taken in from the outside of the system are mainly supplied to the combustor, and the combustor combusts the fuel gas and the air. A reforming rate of hydrocarbon in the hydrogen generator is typically set to lower than 100%. Therefore, the hydrocarbon is contained in the off gas, the amount of heat generated at the time of the combustion of the hydrocarbon being larger than that of hydrogen.

An electric power generation amount of the fuel cell changes in accordance with the change in a load that is a supply destination of the electric power. Further, in accordance with the change in the electric power generation amount of the fuel cell, the flow rate and composition of the off gas also change. In order that the combustor can amount of combustion air is adjusted. However, if the change in the electric power generation amount is rapid, there is a possibility that the adjustment of the amount of air cannot appropriately follow the rapid change, and a combustion state of the combustor deteriorates, so that the fire goes out.

Here, proposed is that when reducing the electric power generation amount, a reducing rate of the flow rate of the oxidizing gas is controlled to be equal to or higher than a reducing rate of the flow rate of the fuel gas (PTL 1). PTL 1 explains that by this control operation, a ratio of the flow rate of the oxidizing gas to the flow rate of the fuel gas is prevented from becoming higher than an appropriate value, so that the fire in the combustor can be prevented from going out.

### Citation List

### Patent Literature

PTL 1: Japanese Laid-Open Patent Application Publication No. 2010-277760

### Summary of Invention

### Technical Problem

When changing the electric power generation amount of the fuel cell, typically, the amount of hydrogen gas supplied to the fuel cell is changed by changing the amount of raw material gas supplied. In accordance with this, the amount of hydrocarbon gas in the off gas changes, so that the amount of heat generated by the combustor changes. For example, in a case where the amount of raw material gas supplied is reduced little by little to reduce the electric power generation amount, the amount of hydrocarbon gas in the off gas decreases, and the amount of heat generated by the combustor also decreases. As a result, the electric power generation amount, the amount of raw material gas supplied, and the temperature of the hydrogen generator change while maintaining a preferable relation thereamong, and the hydrogen generator operates while maintaining a predetermined reforming rate.

However, in a case where a change rate of the electric power generation amount (that is, a change rate of the amount of raw material gas supplied) is high, there is a possibility that the change in the temperature of the hydrogen generator does not appropriately follow the change in the electric power generation amount, and the reforming rate change significantly. For example, in a case where the amount of raw material gas supplied is rapidly reduced to rapidly reduce the electric power generation amount, as with the above, the hydrocarbon gas in the off gas decreases, and in accordance with this decrease, the amount of heat generated by the combustor decreases. However, a case of the hydrogen generator typically has a high heat insulating property, so that even in a case where the amount of heat generated by the combustor decreases, the temperature of the hydrogen generator does not decrease rapidly. Therefore, the temperature of the hydrogen generator becomes comparatively high relative to the amount of raw material gas supplied. As a result, the reforming rate becomes high, and the hydrogen gas may be excessively generated. This is not preferable from the viewpoint that the hydrogen generator is caused to stably perform the reforming reaction in accordance with the electric power generation amount of the fuel cell.

The present invention was made to solve the above problems, and an object of the present invention is to provide a fuel cell system capable of causing a hydrogen generator to stably perform a reforming reaction even in a case where, for example, an electric power generation amount is changed in accordance with a significant change in an electric power load, and a method of operating the fuel cell system.

### Solution to Problem

The above and other objects of the invention are achieved by the fuel cell system according to claim 1 and the method of operating a fuel cell system according to claim 6. Preferred embodiments are claimed in the dependent claims.

### Advantageous Effects of Invention

According to the fuel cell system of the present invention and the method of operating the fuel cell system, even in a case where the electric power generation amount changes, the hydrogen generator can stably perform the reforming reaction.

### Brief Description of Drawings

[Fig. 1] Fig. 1 is a block diagram showing a schematic configuration of a fuel cell system according to an Example which does not form part of the invention but represents background art that is useful for understanding the invention.
[Fig. 2] Fig. 2 is a flow chart showing operations of the fuel cell system according to the Example.
[Fig. 3] Fig. 3 is a block diagram showing a schematic configuration of the fuel cell system according to Embodiment 1.
[Fig. 4] Fig. 4 is a flow chart showing the operations of the fuel cell system according to Embodiment 1.
[Figs. 5A and 5B] Figs. 5A and 5B are flow charts each showing a specific example of an operation of changing a target change rate.
[Fig. 6] Fig. 6 is a flow chart showing the operations of the fuel cell system according to Embodiment 2.
[Fig. 7] Fig. 7 is a block diagram showing a schematic configuration of the fuel cell system according to Embodiment 3.
[Fig. 8] Fig. 8 is a flow chart showing the operations of the fuel cell system according to Embodiment 3.

### Description of Embodiments

A fuel cell system according to the present invention includes: a fuel cell configured to cause a fuel gas and an oxidizing gas to react with each other to generate electric power; a hydrogen generator configured to perform steam reforming of a raw material gas containing a hydrocarbon gas to generate a hydrogen-containing fuel gas; a combustor configured to combust an off fuel gas, discharged from the fuel cell, to heat the hydrogen generator; and a controller configured to store a target change rate used when changing an electric power generation amount of the fuel cell and control the electric power generation amount of the fuel cell based on the target change rate, wherein when changing the electric power generation amount of the fuel cell, the controller changes the target change rate based on input indicating a correlation between the target change rate and a temperature of the hydrogen generator.

With this, in a case where the electric power generation amount is changed in accordance with the change in a load, the controller can change the temperature of the hydrogen generator such that the temperature of the hydrogen generator appropriately follows the change in the electric power generation amount. Therefore, regardless of the change in the load, the hydrogen generator can perform the reaction at a predetermined reforming rate.

The temperature of the hydrogen generator is correlated to an output value of a below-described flame detector and a temperature of a flue gas from the combustor. Therefore, the "input indicating the correlation between the target change rate and the temperature of the hydrogen generator" may contain, for example, not only a direct correlation between the target change rate and the temperature of the hydrogen generator but also a correlation between the target change rate and the output value of the flame detector and a correlation between the target change rate and the temperature of the flue gas from the combustor.

The fuel cell system is configured such that: the combustor includes a burner configured to emit flame; the fuel cell system further includes a flame detector configured to detect a combustion state of the combustor based on a conductivity of the flame to output the combustion state to the controller; and when reducing the electric power generation amount of the fuel cell, the controller reduces the target change rate based on an input from the flame detector.

With this, without additionally providing a temperature detector configured to detect the temperature of the hydrogen generator, the target change rate of the electric power generation amount can be adjusted based on the output of the flame detector typically provided at the hydrogen generator.

The fuel cell system is configured such that in a case where the controller estimates based on the input from the flame detector that the combustor is in a fire extinction state, the controller reduces the target change rate and causes the fuel cell to continue to generate the electric power.

Although details will be described below, in a case where the temperature of the hydrogen generator is not appropriately reduced when the amount of raw material gas supplied is significantly reduced in accordance with the electric power generation amount, the flame detector, such as the flame rod, may misdetect that the combustor is in the fire extinction state although the combustor is in the combustion state. Therefore, in a case where the fire extinction state is detected, the controller reduces the target change rate (reduces the reduction speed of the electric power generation amount) and causes the fuel cell to continue to generate the electric power. With this, the relation between the amount of raw material gas supplied and the temperature of the hydrogen generator is appropriately adjusted, so that the desired reforming rate can be realized.

Alternatively, the fuel cell system is configured such that in a case where the controller estimates based on the input from the flame detector that the combustor is in a fire extinction state, the controller causes the fuel cell to stop generating the electric power, reduces the target change rate, and then causes the fuel cell to restart generating the electric power.

Even in this case, the relation between the amount of raw material gas supplied and the temperature of the hydrogen generator is appropriately adjusted, so that the desired reforming rate can be realized. Especially, by causing the fuel cell to stop generating the electric power once, the combustion of the combustor is intentionally stopped. Thus, the temperature of the hydrogen generator can be reduced more quickly. Here, "causing the fuel cell to stop generating the electric power" denotes the stop of the electric power generation by stopping the supply of the raw material gas to the hydrogen generator. In this case, the off gas is not supplied to the combustor.

The fuel cell system may be configured such that in a case where a current value detected by the flame detector is equal to or smaller than a predetermined first current value, the controlled estimates that the combustor is in the fire extinction state.

The fuel cell system may be configured such that after the controller reduces the target change rate, and in a case where the current value detected by the flame detector is equal to or larger than a second current value larger than the first current value continuously for a predetermined first period or in a case where the current value detected by the flame detector is equal to or larger than the second current value for a predetermined first number of times, the controller increases the target change rate.

In a case where the current value detected by the flame detector is equal to or larger than the second current value as above, it is highly probable that the flame detector has appropriately detected the combustion state, and the appropriate reforming rate has been realized. Therefore, in this case, by increasing the target change rate that has been reduced once, the controller can change the electric power generation amount such that the electric power generation amount quickly follows the change in the load.

The fuel cell system may be configured such that: the hydrogen generator includes a reformer configured to perform the steam reforming of the raw material gas: the fuel cell system further includes a temperature detector configured to detect a temperature of the reformer to output the temperature to the controlled; and in a case where the controller determines that the temperature of the reformer is equal to or higher than a predetermined first temperature while the electric power generation amount of the fuel cell is being reduced, the controller reduces the target change rate.

With this, since the temperature of the reformer included in the hydrogen generator can be directly obtained, whether or not the temperature of the hydrogen generator appropriately follows the change in the electric power generation amount can be determined more correctly. Therefore, the target change rate of the electric power generation amount can be adjusted more appropriately.

The fuel cell system may be configured such that after the controller reduces the target change rate, and in a case where the temperature of the reformer is equal to or lower than a second temperature lower than the first temperature continuously for a predetermined second period or in a case where the temperature of the reformer is equal to or lower than the second temperature for a predetermined second number of times, the controller increases the target change rate.

In a case where the temperature of the reformer is equal to or lower than the second temperature as above, it is highly probable that the hydrogen generator has operated at an appropriate reforming rate. Therefore, in this case, by increasing the target change rate that has been reduced once, the controller can change the electric power generation amount such that the electric power generation amount quickly follows the change in the load.

A method of operating a fuel cell system is described in claim 6.

Hereinafter, fuel cell systems and methods of operating the fuel cell systems according to embodiments of the present invention will be explained in reference to the drawings.

### Example

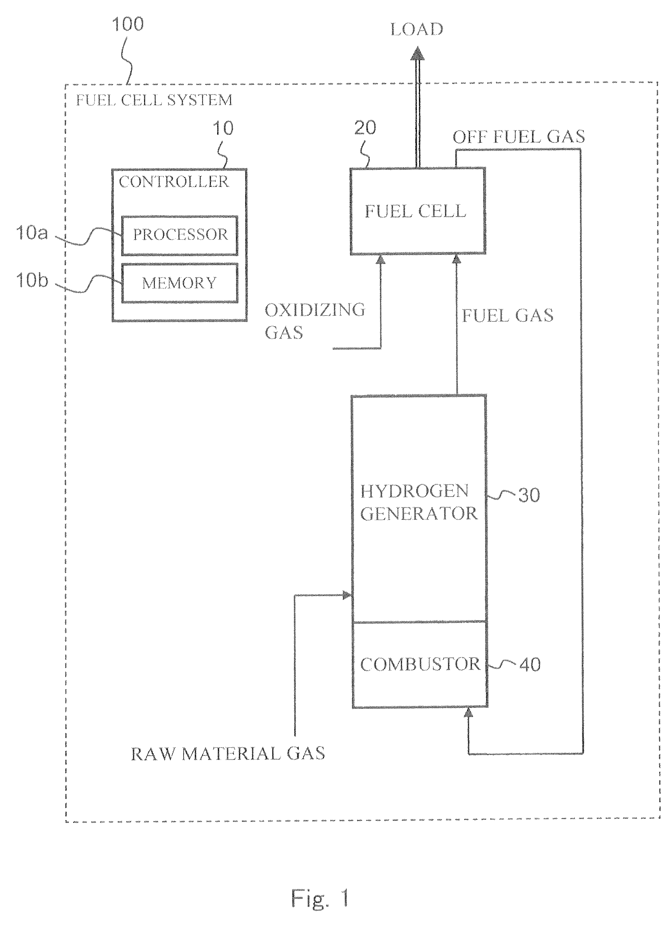

Fig. 1 is a block diagram showing a schematic configuration of a fuel cell system according to an example which does not form part of the invention but represents background art that is useful for understanding the invention. As shown in Fig. 1, a fuel cell system 100 includes at least a controller 10, a fuel cell 20, a hydrogen generator 30, and a combustor 40. The fuel cell 20 includes an anode and a cathode. The fuel cell 20 causes a fuel gas supplied to the anode and an oxidizing gas (such as air) supplied to the cathode to react with each other to generate electricity and heat. The generated electricity is supplied through, for example, an inverter, not shown, to an electric load at home, and the generated heat is accumulated in water in a hot water tank, not shown, to be supplied to a heat load at home.

The fuel gas supplied to the anode is generated by the hydrogen generator 30. The hydrogen generator 30 performs steam reforming of a raw material gas (such as methane or propane) that is a hydrocarbon-based gas, supplied from outside the system, to generate a hydrogen-rich fuel gas. The reforming reaction in the hydrogen generator 30 is an endothermic reaction and requires a predetermined amount of heat. Therefore, an exhaust gas (off fuel gas) from the anode is combusted in the combustor 40 together with the air, and the generated heat is used in the reforming reaction. Since the hydrogen generator 30 includes a case having a high heat insulating property, a heat utilization efficiency (energy efficiency) is improved.

When the hydrogen generator 30 generates the fuel gas, the hydrocarbon is not completely reformed, and the reforming rate is set to lower than 100% (about 90%, for example). The remaining hydrocarbon and the hydrogen gas that did not contribute to the reaction in the fuel cell 10 compose an off fuel gas, and the off fuel gas is supplied to the combustor 40. The amount of generated heat per mole at the time of the combustion of the hydrocarbon is larger than that of the hydrogen. Therefore, by supplying the hydrocarbon to the combustor 40, a large amount of heat can be generated by the combustor 40. Therefore, by setting the reforming rate to a predetermined value lower than 100% as described above, the hydrocarbon can be combusted in the combustor 40, so that the hydrogen generator 30 can be efficiently heated.

The reforming rate of the raw material gas changes based on parameters that are the temperature of the hydrogen generator 30 and the amount of raw material gas supplied. For example, in a case where the amount of raw material gas supplied is constant, the reforming rate becomes high as the temperature of the hydrogen generator 30 becomes high. In a case where the temperature of the hydrogen generator 30 is constant, the reforming rate becomes low as the amount of raw material gas supplied becomes large. As described above, the off fuel gas is supplied to the combustor 40. Therefore, when the amount of raw material gas supplied changes, the composition of the off fuel gas changes, and the amount of heat generated by the combustor 40 also changes. On this account, in a steady state, there is a correlation between the amount of raw material gas supplied and the temperature of the hydrogen generator 30. However, there may be a case where in a short period of time, the temperature of the hydrogen generator 30 cannot adequately follow the change in the amount of raw material gas supplied, due to the heat insulating property of the hydrogen generator 30.

The controller 10 includes: a processor 10a configured to execute calculation operations based on a predetermined program to output calculation results: and a memory 10b configured to store programs and various data used by the processor 10a. The controller 10 controls the entire operations of the below-described fuel cell system 100 in such a manner that the processor 10a operates based on the programs and data stored in the memory 10b.

The memory 10b stores information indicating a target change rate that defines the change rate of the electric power generation amount at the time of the change in a load (in other words, information indicating a target value of a change speed of the electric power generation amount). For example, information "2 watt/second" is stored as the target change rate in a case where the load has changed and the electric power generation amount is reduced. As described below, the fuel cell system 100 according to the present Example is controlled by the controller 10 such that regardless of the electric power generation amount of the fuel cell 20, the reforming rate of the hydrogen generator 30 becomes a value within a predetermined range.

The foregoing has explained the configuration of the fuel cell system 100 according to the present Example. However, to more specifically constitute the system, a pump configured to supply a gas, condensed water, or the like, a flow meter configured to measure the flow rate of the gas, a tank configured to recover the condensed water, a heat exchanger, and the like may be added to the system according to need.

Next, the operations of the fuel cell system 100 will be explained.

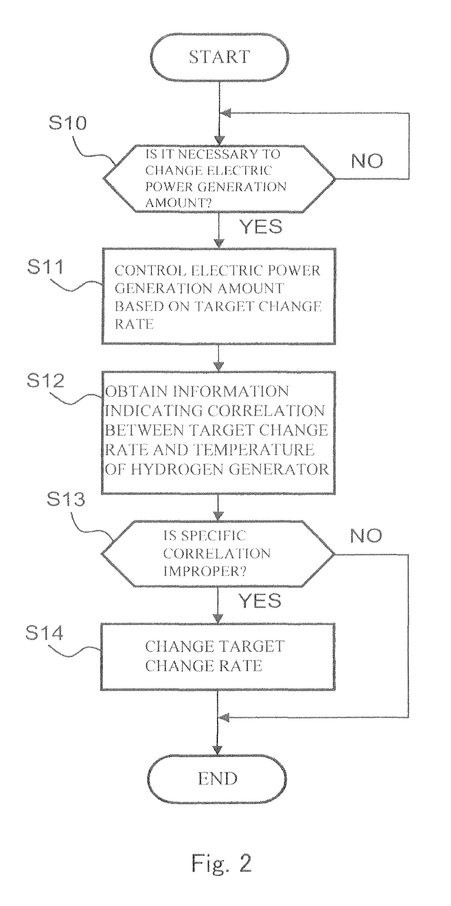

Fig. 2 is a flow chart showing the operations of the fuel cell system 100 according to the Example. The fuel cell system 100 starts up the fuel cell 20 in accordance with a predetermined procedure, and at a predetermined point in time, shifts to an electric power generating mode of supplying the electric power to an external load. During this start-up, the hydrogen generator 30 is heated by a heater, not shown. When the hydrogen generator 30 reaches a temperature appropriate for the reforming reaction, the raw material gas is supplied to the hydrogen generator 30. Thus, the fuel cell system 100 can shift to the electric power generating mode. After the fuel cell system 100 has shifted to the electric power generating mode, whether or not it is necessary to change the electric power generation amount is determined as shown in Fig. 2 (Step S10). To be specific, since an electric power demand changes by the change in a home load or the like, whether or not there is such a change in the load is determined.

In a case where it is unnecessary to change the electric power generation amount (NO in Step S10), Step S10 is repeatedly executed. In contrast, in a case where it is determined that it is necessary to change the electric power generation amount (YES in Step S10), the electric power generation amount is controlled based on the above-described target change rate (Step S11). For example, in a case where the electric power demand has decreased by 600 watts, and in accordance with this, it is necessary to change the electric power generation amount, the controller 10 reduces the electric power generation amount based on the target change rate by two watts per second.

Specifically, the electric power generation amount can be changed by changing the amount of raw material gas supplied to the hydrogen generator 30. In the above example, five minutes (= 600 [watt] / 2 [watt/second]) are required until the electric power generation amount corresponds to the electric power demand after the change in the load. For example, surplus electric power generated in the five minutes may be converted into heat energy by a heater, and the heat energy may warm up the water in the hot water tank to be accumulated.

After the control of the electric power generation amount based on the target change rate is started (Step S11), the controller 10 obtains, at a predetermined point in time, information indicating the correlation between the target change rate and the temperature of the hydrogen generator 30 (Step S12). Hereinafter, for convenience of explanation, the "correlation between the target change rate and the temperature of the hydrogen generator 30" is simply referred to as a "specific correlation". The point in time at which the information indicating the specific correlation is obtained in Step S12 may be set such that the information is obtained every predetermined time (such as every several seconds or every several minutes) after the control in Step S11 is started.

Based on the obtained information indicating the specific correlation, the controller 10 determines whether or not the specific correlation is improper (Step S13). To be specific, whether or not the temperature of the hydrogen generator 30 is an appropriate value (or is within an appropriate range) with respect to the target change rate that is a control standard of the electric power generation amount in Step S11 is determined.

For example, a case is assume where when the load has decreased, the electric power generation amount has been controlled so as to be reduced based on the target change rate, but the hydrogen generator 30 has maintained a high temperature state. In this case, since the hydrogen generator 30 is high in temperature although the amount of raw material gas supplied has been reduced, the reforming rate departs from the predetermined range to become high. As above, in a case where the reforming rate departs from the predetermined range, it is determined that the specific correlation is improper. In contrast, while the reforming rate does not depart from the predetermined range even in a case where the electric power generation amount is changed, it is determined that the specific correlation is proper.

In a case where it is determined that the specific correlation is proper (NO in Step S13), this flow is terminated. In a case where it is determined that the specific correlation is improper (YES in Step S13), the target change rate is changed (Step S14), and the flow is then terminated. A specific example will be explained using the above case again. In a case where the load has decreased, and the electric power generation amount has been reduced, but the temperature of the hydrogen generator 30 is such a high temperature that the reforming rate departs from the predetermined range, the target change rate is reduced in Step S14. For example, the target change rate used when reducing the electric power generation amount is changed from 2 [watt/second] stored in the memory 10b to 1 [watt/second].

By the above control operations, the correlation (specific correlation) between the electric power generation amount and the temperature of the hydrogen generator 30 can be corrected, and the stable operation of the hydrogen generator 30 in a state where the reforming rate is within the predetermined range can be realized.

To be specific, since the composition of the off fuel gas changes in accordance with the change in the electric power generation amount (that is, the change in the amount of raw material gas supplied) under normal circumstances, the temperature of the hydrogen generator 30 also changes properly (such that the reforming rate falls within the predetermined range). However, there is a case where due to, for example, the heat insulating property of the hydrogen generator 30, the change in the temperature of the hydrogen generator 30 becomes slow relative to the change in the electric power generation amount and cannot properly follow the change in the electric power generation amount (NO in Step S13). Therefore, in such a case, the change in the electric power generation amount is alleviated by reducing the target change rate. With this, the temperature of the hydrogen generator 30 properly follows the change in the electric power generation amount. As a result, regardless of the electric power generation amount, a desired reforming rate can be maintained in the hydrogen generator 30, and a preferable electric power generating state can be realized.

In a case where the target change rate is changed (Step S14) in the flow chart of Fig. 2, the flow may return to the determining operation of Step S12 without being terminated. With this, the target change rate can be repeatedly changed until the specific correlation becomes proper.

### Embodiment 1

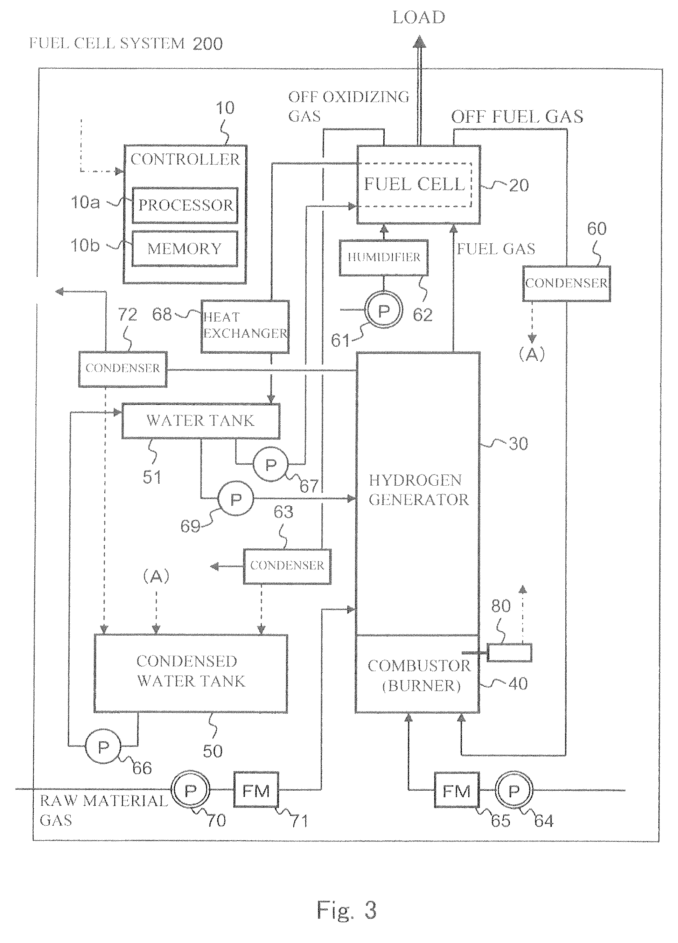

Fig. 3 is a block diagram showing a schematic configuration of the fuel cell system according to Embodiment 1. As shown in Fig. 3, a fuel cell system 200 includes the controller 10, the fuel cell 20, the hydrogen generator 30, and the combustor 40, which are the same as those explained in the Example, and further includes a condensed water tank 50 and a water tank 51.

The fuel cell 20 causes the fuel gas supplied to the anode and the oxidizing gas supplied to the cathode to react with each other to generate electricity and heat. The fuel gas is generated in the hydrogen generator 30, and the off fuel gas discharged after the reaction in the fuel cell 20 flows through an off fuel gas passage to the combustor 40. A condenser 60 is disposed on a portion of the off fuel gas passage. The condenser 60 recovers heat from the off fuel gas and separates condensed water from the off fuel gas. The recovered heat is accumulated in the water in the hot water tank, not shown, and the separated condensed water flows through a condensed water recovering passage to be recovered in the condensed water tank 50.

Outside air is used as the oxidizing gas. Therefore, an oxidizing gas passage is connected to the cathode of the fuel cell 20. An oxidizing gas supply unit 61 and a humidifier 62 are disposed on the oxidizing gas passage. The oxidizing gas supply unit 61 is constituted by a fan, a blower, or the like, and the humidifier 62 is located downstream of the oxidizing gas supply unit 61 and configured to humidify the oxidizing gas such that the oxidizing gas has an appropriate dew point. An off oxidizing gas discharged after the reaction in the fuel cell 20 is discharged through an off oxidizing gas passage. A condenser 63 is disposed on a portion of the off oxidizing gas passage. The condenser 63 recovers heat from the off oxidizing gas and separates condensed water from the off oxidizing gas. The recovered heat is accumulated in the water in the hot water tank, not shown, and the separated condensed water flows through the condensed water recovering passage to be recovered in the condensed water tank 50.

As the combustor 40 configured to heat the hydrogen generator 30, a burner configured to emit flame is included in the present embodiment. The combustor 40 is supplied with combustion air through an air supplying passage in addition to the above-described off fuel gas. The combustor 40 combusts the mixture gas of the off fuel gas and the combustion air to heat the hydrogen generator 30. A combustion air supplying unit 64 and a combustion air meter 65 are disposed on portions of the air supplying passage. The combustion air supplying unit 64 is constituted by a fan, a blower, or the like, and the combustion air meter 65 is located downstream of the combustion air supplying unit 64 and configured to measure the flow rate of the air.

The combustor 40 includes a flame detector 80. Used as the flame detector 80 of the present embodiment is a rectifying flame rod configured to be able to detect a combustion state of the combustor 40 based on a conductivity of the flame. A detected value (current value) of the flame detector 80 constituted by the flame rod increases or decreases in accordance with the increase or decrease or the thermal power of the combustor 40 (burner). The detected value of the flame detector 80 is input to the controller 10, and the controller 10 determines the combustion state of the combustor 40 based on this input signal.

On the other hand, the water recovered in the condensed water tank 50 is supplied by a feed pump 66 to the water tank 51 different from the condensed water tank 50 to be stored in the water tank 51*.* The water in the water tank 51 is used to cool (to recover heat from) the fuel cell 20. To be specific, the water in the water tank 51 is supplied to the fuel cell 20 as cooling water by a cooling water circulating pump 67, recovers the heat generated at the time of the electric power generation of the fuel cell 20, and again returns to the water tank 51. A heat exchanger 68 is disposed on a portion of a passage extending from the fuel cell 20 to the water tank 51. The heat recovered from the fuel cell 20 is recovered by the heat exchanger 68 in the water in the hot water tank, not shown, to be accumulated.

The water in the water tank 51 is also used in the reforming reaction in the hydrogen generator 30. To be specific, the water in the water tank 51 is supplied to the hydrogen generator 30 by a reforming water supply pump 69, and the hydrogen generator 30 reforms this water and the raw material gas to generate hydrogen. A raw material gas supplying unit 70 and a raw material gas flow meter 71 are disposed on portions of a raw material gas supplying passage through which the raw material gas is supplied to the hydrogen generator 30. The raw material gas supplying unit 70 is constituted by a fan, a blower, or the like, and the raw material gas flow meter 71 is located downstream of the raw material gas supplying unit 70 and configured to measure the flow rate of the raw material gas.

Further, an exhaust gas passage through which a flue gas is discharged to the outside of the system is connected to the hydrogen generator 30. A condenser 72 is disposed on a portion of the exhaust gas passage. The condenser 72 recovers heat from the flue gas and separates condensed water from the flue gas. The recovered heat is accumulated in the water in the hot water tank, not shown, and the separated condensed water flows through the condensed water recovering passage to be recovered in the condensed water tank 50.

As described above, the fuel cell system 200 according to the present embodiment includes the flame detector 80 constituted by the flame rod. Since the flame detector 80 basically outputs the detected value corresponding to the thermal power, the controller 10 can recognize the combustion state based on this detected value. However, depending on situations, there is a possibility that although the combustion state is appropriate, the flame detector 80 outputs a signal indicating a fire extinction state, and the controller 10 misdetects that the combustor 40 is in the fire extinction state.

This will be explained in detail. The flame rod outputs as a current value the magnitude of the conductivity of the flame due to ionic substances existing in the flame. When the current value output from the flame rod is large, the controller 10 estimates that the combustion state is stable. In contrast, when the current value is equal to or smaller than a predetermined threshold, the controller 10 estimates that the combustor 40 is in the fire extinction state.

The controller 10 estimates the combustion state based on the off fuel gas generated at a predetermined reforming rate. To be specific, according to the fuel cell system 200, output current values of the flame rod are stored in, for example, the memory 10b as "reference current values", the output current values respectively corresponding to various combustion states of the off fuel gas generated at the predetermined reforming rate. When the controller 10 actually obtains the current value from the flame rod, the controller 10 compares the obtained current value with the reference current value to estimate the corresponding combustion state. In the present embodiment, the off fuel gas when the specific correlation becomes proper is adopted as a standard for the estimation of the combustion state. The reforming rate in the hydrogen generator 30 at this time is hereinafter referred to as a "reference reforming rate".

However, when the reforming rate in the hydrogen generator 30 changes, the composition of the off fuel gas also changes. For example, when the reforming rate increases, the concentration of the hydrocarbon gas in the off fuel gas decreases, and the concentration of the hydrogen gas increases. The amount of ionic substances generated in the flame at the time of the combustion is large in the hydrocarbon gas whereas the amount of ionic substances generated in the flame at the time of the combustion is small in the hydrogen gas. Therefore, when the reforming rate increases, the controller 10 recognizes that the output of the flame rod shows a state close to the fire extinction state in accordance with the decrease in the concentration of the hydrocarbon gas. Therefore, there is a possibility that when the reforming rate in the hydrogen generator 30 is extremely different from the reference reforming rate, the controller 10 may misdetect that the combustor 40 is in the fire extinction state.

From a different point of view, the case where the controller 10 has estimated that the combustor 40 is in the fire extinction state indicates a possibility that the reforming rate in the hydrogen generator 30 is extremely different from the reference reforming rate. To be specific, this case indicates a possibility that the specific correlation that is the relation between the target change rate and the temperature of the hydrogen generator 30 is not proper. Therefore, the output value from the flame detector 80 is also information for determining whether or not the specific correlation is proper (that is, information indicating the specific correlation).

The fuel cell system 200 according to the present embodiment realizes the stable operation (operation by which the specific correlation becomes proper) of the hydrogen generator 30 as with Embodiment 1 and also realizes the prevention of the above misdetection in a case where the flame rod is adopted as the flame detector 80.

Hereinafter, the operations of the fuel cell system 200 will be explained.

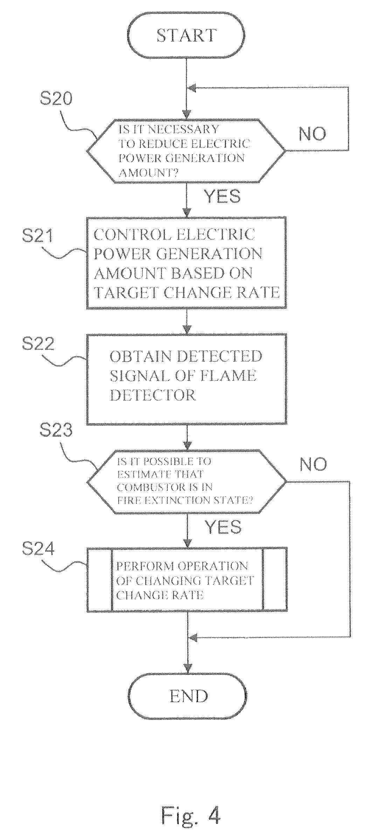

Fig. 4 is a flow chart showing the operations of the fuel cell system 200 according to Embodiment 2. The fuel cell system 200 starts up the fuel cell 20 in accordance with a predetermined procedure, and at a predetermined point in time, shifts to the electric power generating mode of supplying the electric power to the external load. After the fuel cell system 200 has shifted to the electric power generating mode, whether or not it is necessary to change the electric power generation amount is determined as shown in Fig. 4 (Step S20).

In a case where it is unnecessary to reduce the electric power generation amount (NO in Step S20), Step S20 is repeatedly executed. In contrast, in a case where it is determined that it is necessary to change the electric power generation amount (YES in Step S20), the electric power generation amount is controlled based on the above-explained target change rate (Step S21). For example, in a case where the electric power demand has decreased by 600 watts, and in accordance with this, it is necessary to reduce the electric power generation amount, the controller 10 reduces the electric power generation amount based on the target change rate by two watts per second. The procedure of changing the electric power generation amount and how to deal with the surplus electric power are the same as those explained in Embodiment 1.

After the controller 10 has started controlling the electric power generation amount based on the target change rate (Step S21), the controller 10 obtains the output value of the flame detector 80 at a predetermined point in time (Step S22). This point in time may be set such that the output value of the flame detector 80 is obtained every predetermined time (such as every several seconds or every several minutes) after the control in Step S21 is started. Based on the obtained output value of the flame detector 80, the controller 10 determines whether or not it is possible to estimate that the combustor 40 is in the fire extinction state (Step S23). To be specific, the controller 10 compares the obtained output value with the reference current value, stored in the memory 10b or the like in advance, to specify the corresponding combustion state and then determines whether or not the specified combustion state is the fire extinction state.

As a result, in a case where it is determined that the combustion state is not the fire extinction state (NO in Step S23), the flow is terminated. In a case where it is determined that the combustion state is the fire extinction state (YES in Step S23), the operation of changing the target change rate is executed (Step S24), and the flow is then terminated.

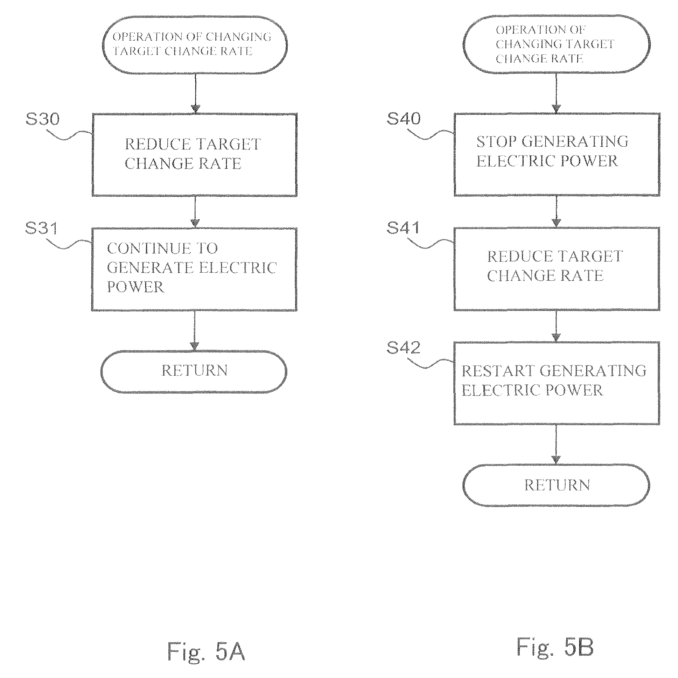

Figs. 5A and 5B are flow charts each showing a specific example of the operation of changing the target change rate in Step S24. In the example shown in Fig. 5A, in a case where it is determined that the combustion state is the fire extinction state (YES in Step S23 of Fig. 4), the target change rate is reduced (Step S30), and the electric power generating operation of the fuel cell 20 is continued (Step S31). In other words, even in a case where it is determined that the combustion state is the fire extinction state, the target change rate is reduced while continuing the electric power generating operation of the fuel cell 20. In the example shown in Fig. 5B, in a case where it is determined that the combustion state is the fire extinction state, the electric power generating operation (that is, the supply of the raw material gas) is stopped once (Step S40), and the target change rate is reduced (Step S41). Then, the electric power generating operation is restarted (Step S42).

In each of Figs. 5A and 5B, after the target change rate is reduced, the electric power generation amount (that is, the amount of raw material gas supplied) is controlled based on the reduced target change rate. For example, the target change rate used when reducing the electric power generation amount is changed from 2 [watt/second] stored in the memory 10b to 1 [watt/second], and in accordance with this, the amount of raw material gas supplied is controlled.

By the above control operations, the correlation between the electric power generation amount and the temperature of the hydrogen generator 30 can be corrected based on the output value of the flame detector 80 (that is, the specific correlation), and the stable operation of the hydrogen generator 30 in a state where the reforming rate is within the predetermined range can be realized. Further, the misdetection of the flame detector 80 can be prevented, and the combustion state of the combustor 40 can be determined correctly. To be specific, even in a case where the determination by the controller 10 that the combustion state is the fire extinction state is performed due to the change in the reforming rate (that is, the change of the composition of the off fuel gas), the proper reforming rate (reference reforming rate) can be recovered by reducing the target change rate, so that the correct determination of the combustion state can be performed.

### Embodiment 2

Next, the fuel cell system according to Embodiment 2 will be explained. Since the fuel cell system according to the present embodiment is the same in configuration as the fuel cell system 200 explained in Embodiment 1, an explanation of the configuration thereof is omitted.

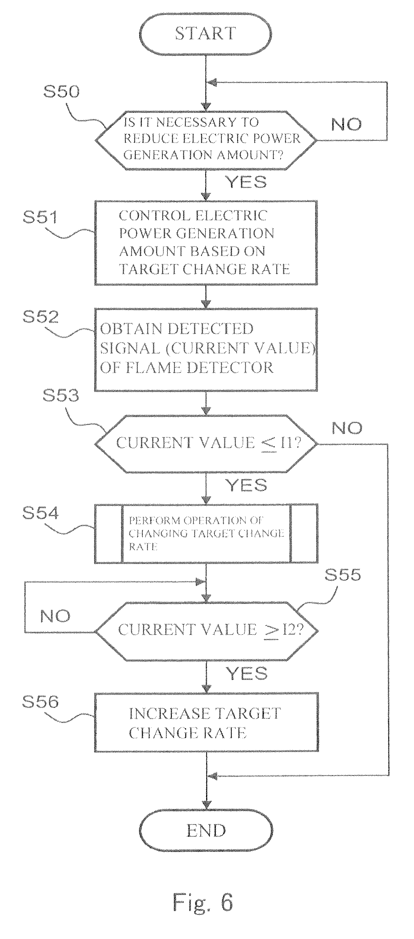

Fig. 6 is a flow chart showing the operations of the fuel cell system 200 according to Embodiment 2. The fuel cell system 200 starts up the fuel cell 20 in accordance with a predetermined procedure, and at a predetermined point in time, shifts to the electric power generating mode of supplying the electric power to the external load. After the fuel cell system 200 has shifted to the electric power generating mode, the controller 10 executes the operations of Steps S50 to S52 that are the same as Steps S20 to S22 of Fig. 4 in Embodiment 2. To be specific, the determination regarding whether or not it is necessary to reduce the electric power generation amount (Step S50), the control of the electric power generation amount based on the target change rate in a case where it is determined that it is necessary to reduce the electric power generation amount (Step S51), and the acquisition of the output current value of the flame detector 80 at a predetermined point in time (Step S52) are executed.

As one of the above-explained reference current values, a "first reference current value I1" is stored in the memory 10b of the controller 10. The first reference current value I1 is set as such a thresholct that when the output current value of the flame detector 80 is equal to or lower than the current value I1, it can be estimated that the combustor 40 is in the fire extinction state.

The controller 10 compares the output current value, obtained from the flame detector 80, with the first reference current value I1 (Step S53). As a result, in a case where it is determined that the obtained current value is larger than the first reference current value I1 (NO in Step S53), it can be estimated that the combustion state is stable. Therefore, the flow is terminated. In contrast, in a case where it is determined that the obtained current value is equal to or smaller than the first reference current value I1 (YES in Step S53), it is estimated that the combustion state is the fire extinction state, and the operation of changing the target change rate is performed (Step S54). As the operation of changing the target change rate, the operation shown in Fig. 5A or 5B can be adopted.

After that, at a predetermined point in time, the controller 10 further obtains the output current value from the flame detector 80 and determines a magnitude relation between the obtained current value and a predetermined second reference current value I2 (Step S55).

Here, the "the second reference current value I2" is used as a reference for determining whether to increase the target change rate after the target change rate is once reduced (Step S54) and is set to a predetermined value larger than the above-described first reference current value I1. To be specific, in a case where it is estimated that the combustor 40 is in the fire extinction state, and the target change rate is reduced, the reforming rate of the hydrogen generator 30 is recovered in a short period of time to become a proper reference reforming rate. Therefore, after the reforming rate of the hydrogen generator 30 has been recovered to become the reference reforming rate, the target change rate can be increased.

On this account, in a case where it is determined that the output current value of the flame detector 80 is still stall and is smaller than the second reference current value I2 (NO in Step S55), the combustion state is continuously monitored by repeating the operation of Step S55. In contrast, in a case where it is determined that the output current value becomes large and is equal to or larger than the second reference current value I2 (YES in Step S55), the target change rate is increased (Step S56), and the flow is then terminated.

In the operation of Step S55 according to the present embodiment, to more correctly determine the combustion state, the controller 10 continuously obtains the output current value of the flame detector 80. Then, in a case where the obtained current value has become equal to or larger than the second reference current value I2 for a predetermined period (first period) or in a case where the obtained current value has become equal to or larger than the second reference current value I2 for a predetermined number of times (first number of times), the controller determines that the current value is equal to or larger than the second reference current value 12 (YES in Step S55).

The first period may be set based on an electric power generating time of the fuel cell 20 or an operating time of the fuel cell system 200. the first number of times may be set based on the number of times of the change in the electric power load or the number of times of the start-up or stop of the system 200. The specific procedure for determining in Step S55 that the current value is equal to or larger than the second reference current value I2 is not limited to the above. The other procedure may be adopted as long as the recovery of the reference reforming rate (that is, the improvement of the specific correlation) can be correctly recognized.

In the case of increasing the target change rate in Step S56, the target change rate may be returned to the target change rate before the reduction in Step S54 or may be increased to a target change rate different from the target change rate before the reduction.

By the above control operations, even in a case where the target change rate has been reduced once, the target change rate can be increased in accordance with the stabilization of the combustion state, so that the energy saving operation can be performed. To be specific, after the reference reforming rate has been recovered by the reduction in the target change rate, the necessity of maintaining the target change rate at a low level is low. From the viewpoint of the energy saving, maintaining the target change rate at a low level is not preferable since it causes the increase in the surplus electric power. By increasing the target change rate, the generation of the surplus electric power can be suppressed, so that the energy efficiency can be improved.

### Embodiment 3

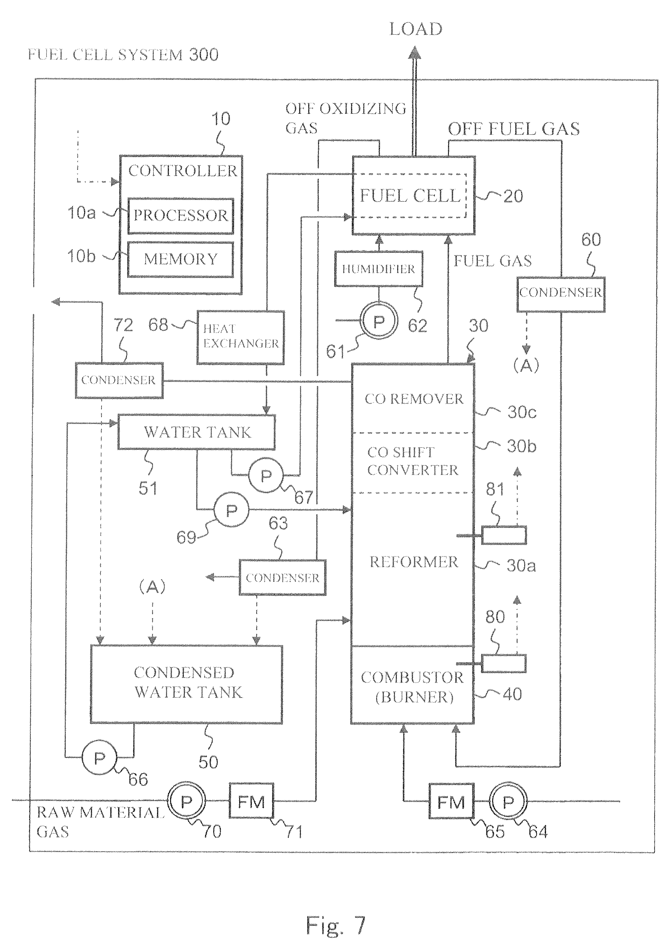

Fig. 7 is a block diagram showing a schematic configuration of the fuel cell system according to Embodiment 3. A fuel cell system 300 shown in Fig. 7 is mostly the same in configuration as the fuel cell system 200 (see Fig. 3) explained in Embodiment 1. However, unlike the fuel cell system 200, the fuel cell system 300 includes a temperature detector 81 configured to detect the temperature of the hydrogen generator 30.

More specifically, as shown in Fig. 7, the hydrogen generator 30 includes: a reformer 30a configured to reform the raw material gas into the hydrogen-rich gas; a CO shift converter 30b configured to shift CO (carbon monoxide) generated in the reformer 30a: and a CO remover 30c configured to further remove the CO in the gas having flowed through the CO shift converter 30b. The temperature detector 81 is provided to detect the temperature of the reformer 30a, and the temperature of the reformer 30a detected by the temperature detector 81 is input to the controller 10.

The memory 10b of the controller 10 prestores information about the temperature (hereinafter referred to as a "reference temperature") of the reformer 30a when the specific correlation becomes proper relative to an arbitrary amount of electric power generated (that is, an arbitrary amount of raw material gas supplied). This reference temperature may be set as one numerical value relative to a certain amount of electric power generated or may be set to a predetermined numerical value range relative to a certain amount of electric power generated. Therefore, for example, in a case where the amount of raw material gas supplied is reduced to change the electric power generation amount, and the detected temperature of the reformer 30a is higher than the reference temperature prestored in the memory 10b, it can be determined that the specific correlation is not proper. As above, the detected temperature of the reformer 30a can be used as the information indicating the specific correlation.

Further, in a case where the detected temperature of the reformer 30a is higher than the reference temperature, the reforming rate of the hydrogen generator 30 is higher than the reference reforming rate. Therefore, in a case where the flame detector 80 constituted by the flame rod is included as in the system 300, there is a possibility that due to the change in the composition of the off fuel gas, the controller 10 misdetects that the combustor 40 is in the fire extinction state. Therefore, the detected temperature of the reformer 30a may also be used as an indicator for determining whether or not the controller 10 misdetects that the combustor 40 is in the fire extinction state.

Next, the operations of the fuel cell system 300 will be explained.

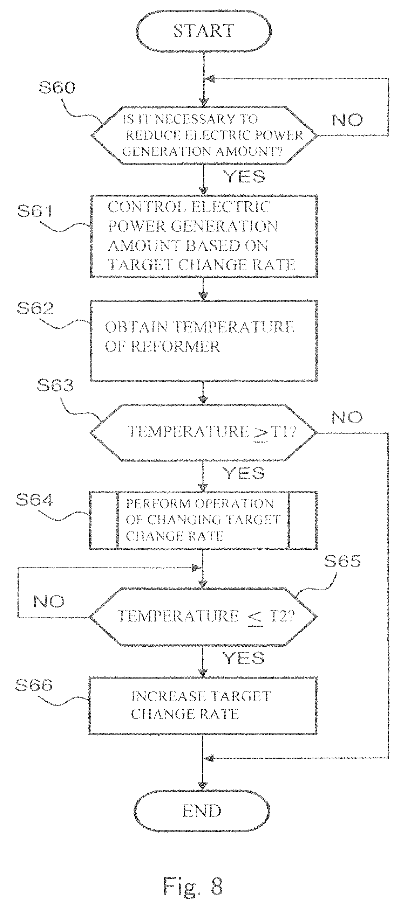

Fig. 8 is a flow chart showing the operations of the fuel cell system 300 according to Embodiment 3. The fuel cell system 300 starts up the fuel cell 20 in accordance with a predetermined procedure, and at a predetermined point in time, shifts to the electric power generating mode of supplying the electric power to the external load. After the fuel cell system 300 has shifted to the electric power generating mode, the controller 10 executes the operations of Steps S60 and S61 that are the same as Steps S50 and S51 of Fig. 6 in Embodiment 2. To be specific, the determination regarding whether or not it is necessary to reduce the electric power generation amount (Step S60) and the control of the electric power generation amount based on the target change rate in a case where it is determined that it is necessary to reduce the electric power generation amount (Step S61) are executed.

Next, after the controller 10 has started controlling the electric power generation amount based on the target change rate (Step S61), the controller 10 obtains the temperature of the reformer 30a at a predetermined point in time (Step S62). This point in time may be set such that the temperature of the reformer 30a is obtained every predetermined time (such as every several seconds or every several minutes) after the control in Step S61 is started. The controller 10 determines whether or not the obtained temperature of the reformer 30a is equal to or higher than a predetermined temperature (first reference temperature) T1 (Step S63). This first reference temperature T1 is set as an upper limit of the reference temperature prestored in the memory 10b. Therefore, that the detected temperature of the reformer 30a is equal to or higher than the first reference temperature T1 indicates that the specific correlation is not proper and also indicates that there is a high possibility that the controller 10 misdetects that the combustor 40 is in the fire extinction state.

In a case where it is determined that the temperature of the reformer 30a is lower than the first reference temperature T1 (NO in Step S63), the controlled 10 can estimate that the specific correlation is proper, and the combustion state is stable. Therefore, the flow is terminated. In contrast, in a case where it is determined that the temperature of the reformer 30a is equal to or higher than the first reference temperature T1 (YES in Step S63), the specific correlation is not proper, and there is a possibility that the coniroller 10 misdetects that the combustor 40 is in the fire extinction state. Therefore, the operation of changing the target change rate (Step S64) is performed. As the operation of changing the target change rate, the operation shown in Fig. 5A or 5B may be adopted.

After that, at a predetermined point in time, the controller 10 further obtains the detected temperature from the temperature detector 81 and determines a magnitude relation between the detected temperature and a predetermined second reference temperature T2 (Step S65).

Here, the "second reference temperature T2" is used as a reference for determining whether to increase the target change rate after the target change rate is once reduced (Step S64) and is set to a predetermined value smaller than the above-described first reference temperature T1. To be specific, in a case where the target change rate is reduced in Step S64. the reforming rate of the hydrogen generator 30 is recovered in a short period of time to become the proper reference reforming rate. Therefore, after the reforming rate has been recovered to become the reference reforming rate, the target change rate can be increased.

Therefore, in a case where it is determined that the detected temperature of the reformer 30a is still higher than the second reference temperature T2 (NO in Step S65), the operation of Step S65 is repeated, and the controller 10 waits for the temperature decrease of the reformer 30a. In contrast, in a case where it is determined that the detected temperature is equal to or lower than the second reference temperature T2 (YES in Step S65), the target change rate is increased (Step S66), and the flow is then terminated.

In the operation of Step S65 according to the present embodiment, to more correctly determine whether or not the increase in the target change rate is allowed (that is, to more correctly determine the improvement of the specific correlation), the controller 10 contiguously obtains the detected temperature of the temperature detector 81. In a case where the detected temperature has become equal to or rower than the second reference temperature T2 for a predetermined period (second period) to or in a case where the detected temperature has become equal to or lower than the second reference temperature T2 for a predetermined number of times (second number of times), the controller 10 determines that the temperature is equal to or lower than the second reference temperature T2 (YES in Step S65).

The second period may be set based on the electric power generating time of the fuel cell 20 or the operating time of the fuel cell system 300. The second number of times may be set based on the number of times of the change in the electric power load or the number of times of the start-up or stop of the system 300. The specific procedure for determining in Step S65 that the temperature is equal to or lower than the second reference temperature T2 is not limited to the above. The other procedure may be adopted as long as the improvement of the specific correlation can be correctly recognized.

In the case of increasing the target change rate in Step S66, the target change rate may be returned to the target change rate before the reduction in Step S64 or may be increased to a target change rate different from the target change rate before the reduction.

In the above explanations, examples of the information indicating the specific correlation are especially the output current value of the flame detector 80 and the detected temperature of the temperature detector 81. However, examples of the information are not limited to these. To be specific, the other information may be adopted as long as it can be used as an indicator tor determining whether or not the temperature of the hydrogen generator 30 properly follows the change in the electric power generation amount of the fuel cell 20 to change. For example, as such an indicator, the temperature of the exhaust gas (that is, the flue gas from the combustor 40) from the CO remover 30c include in the hydrogen generator 30 may be adopted. In a case where the temperature of the hydrogen generator 30 does not properly decrease relative to the decrease in the electric power generation amount, this situation appears as a slow temperature decrease of the flue gas relative to the decrease in the electric power generation amount.

### Industrial Applicability

The present invention can be utilized in a fuel cell system including a fuel cell configured to cause a fuel gas and an oxidizing gas to react with each other to generate electric power, and a method of operating the fuel cell system. In addition to the fuel cell, the configuration for preventing the controller from misdetecting that the combustor is in the fire extinction state is applicable to a combustor using a hydrogen gas and an industrial combustor using a gas (such as a coke-oven gas) which tends to cause an output current value of a flame rod to become small as with hydrogen.

### Reference Signs List

- 10: controller
- 20: fuel cell
- 30: hydrogen generator
- 40: combustor
- 80: flame detector
- 81: temperature detector
- 100: fuel cell system
- 200: fuel cell system
- 300: fuel cell system

## Claims

1. A fuel cell system comprising:
a fuel cell (20) configured to cause a fuel gas and an oxidizing gas to react with each other to generate electric power;
a hydrogen generator (30) configured to perform steam reforming of a raw material gas containing a hydrocarbon gas to generate a hydrogen-containing fuel gas;
a combustor (40) configured to combust an off fuel gas, discharged from the fuel cell (20), to heat the hydrogen generator (30), the combustor (40) including a burner configured to emit flame;
a controller (10) configured to store a target change rate used when changing an electric power generation amount of the fuel cell (20) and control the electric power generation amount of the fuel cell (20) based on the target change rate; and
a flame detector (80) configured to detect a combustion state of the combustor (40) based on a conductivity of the flame to output the combustion state to the controller (10),
wherein
when changing the electric power generation amount of the fuel cell (20), and in a case where the controller (10) estimates based on an input from the flame detector (80) that the combustor (40) is in a fire extinction state, the controller (10) executes an operation of reducing the target change rate and causing the fuel cell (20) to continue to generate the electric power or an operation of causing the fuel cell (20) to stop generating the electric power, reducing the target change rate, and then causing the fuel cell (20) to restart generating the electric power, based on the input from the flame detector (80) indicating a correlation between the target change rate and a temperature of the hydrogen generator (30).

2. The fuel cell system according to claim 1, wherein in a case where a current value detected by the flame detector (80) is equal to or smaller than a predetermined first current value, the controller (10) estimates that the combustor (40) is in the fire extinction state.

3. The fuel cell system according to claim 2, wherein after the controller (10) reduces the target change rate, and in a case where the current value detected by the flame detector (80) is equal to or larger than a second current value larger than the first current value continuously for a predetermined first period or in a case where the current value detected by the flame detector (80) is equal to or larger than the second current value for a predetermined first number of times, the controller (10) increases the target change rate.

4. The fuel cell system according to claim 1, wherein the hydrogen generator (30) includes a reformer configured to perform the steam reforming of the raw material gas,
the fuel cell system further comprising a temperature detector configured to detect a temperature of the reformer to output the temperature to the controller (10), wherein
in a case where the controller (10) determines that the temperature of the reformer is equal to or higher than a predetermined first temperature while the electric power generation amount of the fuel cell (20) is being reduced, the controller (10) reduces the target change rate.

5. The fuel cell system according to claim 4, wherein after the controller (10) reduces the target change rate, and in a case where the temperature of the reformer is equal to or lower than a second temperature lower than the first temperature continuously for a predetermined second period or in a case where the temperature of the reformer is equal to or lower than the second temperature for a predetermined second number of times, the controller (10) increases the target change rate.

6. A method of operating a fuel cell system,
the fuel cell system including:
a fuel cell (20) configured to cause a fuel gas and an oxidizing gas to react with each other to generate electric power;
a hydrogen generator (30) configured to perform steam reforming of a raw material gas containing a hydrocarbon gas to generate a hydrogen-containing fuel gas;
a combustor (40) configured to combust an off fuel gas, discharged from the fuel cell (20), to heat the hydrogen generator (30), the combustor (40) including a burner configured to emit flame; and
a flame detector (80) configured to detect a combustion state of the combustor (40) based on a conductivity of the flame to output the combustion state to the controller (10),
the method comprising:
controlling an electric power generation amount of the fuel cell (20) based on a predetermined target change rate;
obtaining from the flame detector (80) an input indicating a correlation between the target change rate and a temperature of the hydrogen generator (30);
estimating based on the input from the flame detector (80) whether or not the combustor (40) is in a fire extinction state; and
in a case where it is estimated that the combustor (40) is in the fire extinction state, executing an operation of reducing the target change rate and causing the fuel cell (20) to continue to generate the electric power or an operation of causing the fuel cell (20) to stop generating the electric power, reducing the target change rate, and then causing the fuel cell (20) to restart generating the electric power.

## Patentansprüche

1. Brennstoffzellensystem, umfassend:
eine Brennstoffzelle (20), die konfiguriert ist zum Veranlassen einer Reaktion eines Brennstoffgases mit einem Oxidationsgas für das Erzeugen von elektrischer Energie,
einen Wasserstoffgenerator (30), der konfiguriert ist zum Durchführen einer Dampfreformierung eines Rohmaterialgases, das ein Kohlenwasserstoffgas enthält, für das Erzeugen eines wasserstoffhaltigen Brennstoffgases,
einen Verbrenner (40), der konfiguriert ist zum Verbrennen eines Brennstoffabgases, das von der Brennstoffzelle (20) ausgeführt wird, für das Heizen des Wasserstoffgenerators (30), wobei der Verbrenner (40) einen Brenner enthält, der konfiguriert ist zum Emittieren einer Flamme,
eine Steuereinrichtung (10), die konfiguriert ist zum Speichern einer Zieländerungsrate, die beim Ändern einer Elektrische-Energie-Erzeugungsgröße der Brennstoffzelle (20) verwendet wird, und zum Steuern der Elektrische-Energie-Erzeugungsgröße der Brennstoffzelle (20) basierend auf der Zieländerungsrate, und
einen Flammendetektor (80), der konfiguriert ist zum Erfassen des Verbrennungszustands des Verbrenners (40) basierend auf der Leitfähigkeit der Flamme und zum Ausgeben des Verbrennungszustands an die Steuereinrichtung (10), wobei:
wenn die Elektrische-Energie-Erzeugungsgröße der Brennstoffzelle (20) geändert wird und die Steuereinrichtung (10) basierend auf einer Eingabe von dem Flammendetektor (80) schätzt, dass sich der Verbrenner (40) in einem Feuerlöschzustand befindet, die Steuereinrichtung (10) einen Betrieb zum Reduzieren der Zieländerungsrate und zum Veranlassen der Brennstoffzelle (20), mit dem Erzeugen von elektrischer Energie fortzufahren, oder einen Betrieb zum Veranlassen der Brennstoffzelle (20), das Erzeugen von elektrischer Energie zu stoppen, zum Reduzieren der Zieländerungsrate und dann zum Veranlassen der Brennstoffzelle (20), erneut mit dem Erzeugen der elektrischen Energie zu beginnen, basierend auf der Eingabe von dem Flammendetektor (80), die eine Korrelation zwischen der Zieländerungsrate und der Temperatur des Wasserstoffgenerators (30) angibt, durchführt.

2. Brennstoffzellensystem nach Anspruch 1, wobei, wenn ein durch den Flammendetektor (80) erfasster Stromwert gleich oder kleiner als ein vorbestimmter erster Stromwert ist, die Steuereinrichtung (10) schätzt, dass sich der Verbrenner (40) in dem Feuerlöschzustand befindet.

3. Brennstoffzellensystem nach Anspruch 2, wobei, wenn die Steuereinrichtung (10) die Zieländerungsrate reduziert hat und der durch den Flammendetektor (80) erfasste Stromwert kontinuierlich für eine vorbestimmte erste Periode gleich oder größer als ein zweiter Stromwert, der größer als der erste Stromwert ist, ist oder wenn der durch den Flammendetektor (80) erfasste Stromwert für eine vorbestimmte Anzahl von Wiederholungen gleich oder größer als der zweite Stromwert ist, die Steuereinrichtung (10) die Zieländerungsrate erhöht.

4. Brennstoffzellensystem nach Anspruch 1, wobei der Wasserstoffgenerator (30) einen Reformer enthält, der konfiguriert ist zum Durchführen der Dampfreformierung des Rohmaterialgases, wobei das Brennstoffzellensystem weiterhin einen Temperaturdetektor umfasst, der konfiguriert ist zum Erfassen der Temperatur des Reformers und zum Ausgeben der Temperatur an die Steuereinrichtung (10), wobei, wenn die Steuereinrichtung (10) bestimmt, dass die Temperatur des Reformers gleich oder höher als eine vorbestimmte erste Temperatur ist, während die Elektrische-Energie-Erzeugungsgröße der Brennstoffzelle (20) reduziert wird, die Steuereinrichtung (10) die Zieländerungsrate reduziert.

5. Brennstoffzellensystem nach Anspruch 4, wobei, wenn die Steuereinrichtung (10) die Zieländerungsrate reduziert hat und die Temperatur des Reformers kontinuierlich für eine vorbestimmte zweite Zeitperiode gleich oder niedriger als eine zweite Temperatur, die niedriger als die erste Temperatur ist, ist oder wenn die Temperatur des Reformers für eine vorbestimmte Anzahl von Wiederholungen gleich oder niedriger als die zweite Temperatur ist, die Steuereinrichtung (10) die Zieländerungsrate erhöht.

6. Verfahren zum Betreiben eines Brennstoffzellensystems,
wobei das Brennstoffzellensystem umfasst:
eine Brennstoffzelle (20), die konfiguriert ist zum Veranlassen einer Reaktion eines Brennstoffgases mit einem Oxidationsgas für das Erzeugen von elektrischer Energie,
einen Wasserstoffgenerator (30), der konfiguriert ist zum Durchführen einer Dampfreformierung eines Rohmaterialgases, das ein Kohlenwasserstoffgas enthält, für das Erzeugen eines wasserstoffhaltigen Brennstoffgases,
einen Verbrenner (40), der konfiguriert ist zum Verbrennen eines Brennstoffabgases, das von der Brennstoffzelle (20) ausgeführt wird, für das Heizen des Wasserstoffgenerators (30), wobei der Verbrenner (40) einen Brenner enthält, der konfiguriert ist zum Emittieren einer Flamme, und
einen Flammendetektor (80), der konfiguriert ist zum Erfassen des Verbrennungszustands des Verbrenners (40) basierend auf der Leitfähigkeit der Flamme und zum Ausgeben des Verbrennungszustands an die Steuereinrichtung (10), wobei das Verfahren umfasst:
Steuern einer Elektrische-Energie-Erzeugungsgröße der Brennstoffzelle (20) basierend auf einer vorbestimmten Zieländerungsrate,
Erhalten, von dem Flammendetektor (80), einer Eingabe, die eine Korrelation zwischen der Zieländerungsrate und der Temperatur des Wasserstoffgenerators (30) angibt,
Schätzen, basierend auf der Eingabe von dem Flammendetektor (80), ob sich der Verbrenner (40) in einem Feuerlöschzustand befindet, und
wenn geschätzt wird, dass sich der Verbrenner (40) in dem Feuerlöschzustand befindet, Ausführen eines Betriebs zum Reduzieren der Zieländerungsrate und zum Veranlassen der Brennstoffzelle (20), mit dem Erzeugen von elektrischer Energie fortzufahren, oder eines Betriebs zum Veranlassen der Brennstoffzelle (20), das Erzeugen von elektrischer Energie zu stoppen, zum Reduzieren der Zieländerungsrate und dann zum Veranlassen der Brennstoffzelle (20), erneut mit dem Erzeugen der elektrischen Energie zu beginnen.

## Revendications

1. Système de pile à combustible comprenant :
une pile à combustible (20) configurée pour provoquer une réaction mutuelle entre un gaz combustible et un gaz oxydant afin de générer de l'énergie électrique ;
un générateur d'hydrogène (30) configuré pour mettre en oeuvre un reformage vapeur d'une matière première gazeuse contenant un hydrocarbure gazeux afin de générer un gaz combustible contenant de l'hydrogène ;
une chambre de combustion (40) configurée pour brûler un gaz combustible effluent, déchargé par la pile à combustible (20), afin de chauffer le générateur d'hydrogène (30), la chambre de combustion (40) comportant un brûleur configuré pour émettre une flamme ;
un contrôleur (10) configuré pour stocker un taux de variation cible utilisé lors d'une variation de la quantité d'énergie électrique générée par la pile à combustible (20) et pour contrôler la quantité d'énergie électrique générée par la pile à combustible (20) sur base du taux de variation cible ; et
un détecteur de flamme (80) configuré pour détecter un état de combustion de la chambre de combustion (40) sur base de la conductivité de la flamme afin d'envoyer l'état de combustion au contrôleur (10), dans lequel
lors d'une variation de la quantité d'énergie électrique générée par la pile à combustible (20), et dans le cas où le contrôleur (10) estime, sur base d'une entrée provenant du détecteur de flamme (80), que la chambre de combustion (40) se trouve dans un état d'extinction de feu, le contrôleur (10) exécute une opération consistant à réduire le taux de variation cible et à commander à la pile à combustible (20) de continuer à générer l'énergie électrique ou une opération consistant à commander à la pile à combustible (20) d'arrêter la génération d'énergie électrique, à réduire le taux de variation cible, et à commander ensuite à la pile à combustible (20) de redémarrer la génération d'énergie électrique, sur base de l'indication, par l'entrée provenant du détecteur de flamme (80), d'une corrélation entre le taux de variation cible et une température du générateur d'hydrogène (30).

2. Système de pile à combustible selon la revendication 1, dans lequel, dans le cas où une valeur de courant détectée par le détecteur de flamme (80) est inférieure ou égale à une première valeur de courant prédéterminée, le contrôleur (10) estime que la chambre de combustion (40) se trouve dans l'état d'extinction de feu.

3. Système de pile à combustible selon la revendication 2, dans lequel, après que le contrôleur (10) a réduit le taux de variation cible, et dans le cas où la valeur de courant détectée par le détecteur de flamme (80) est supérieure ou égale à une deuxième valeur de courant supérieure à la première valeur de courant de manière continue durant une première période prédéterminée ou dans le cas où la valeur de courant détectée par le détecteur de flamme (80) est supérieure ou égale à une deuxième valeur de courant durant un premier nombre de fois prédéterminé, le contrôleur (10) augmente le taux de variation cible.

4. Système de pile à combustible selon la revendication 1, dans lequel le générateur d'hydrogène (30) comprend un reformeur configuré pour mettre en oeuvre le reformage vapeur de la matière première gazeuse, le système de pile à combustible comprenant en outre un détecteur de température configuré pour détecter une température du reformeur pour envoyer la température au contrôleur (10), dans lequel, dans le cas où le contrôleur (10) détermine que la température du reformeur est supérieure ou égale à une première température prédéterminée alors que la quantité d'énergie électrique générée par la pile à combustible (20) est réduite, le contrôleur (10) réduit le taux de variation cible.

5. Système de pile à combustible selon la revendication 4, dans lequel, après que le contrôleur (10) a réduit le taux de variation cible, et dans le cas où la température du reformeur est inférieure ou égale à une deuxième température inférieure à la première température de manière continue durant une deuxième période prédéterminée ou dans le cas où la température du reformeur est inférieure ou égale à la deuxième température durant un deuxième nombre de fois prédéterminé, le contrôleur (10) augmente le taux de variation cible.

6. Procédé de fonctionnement d'un système de pile à combustible, le système de pile à combustible comprenant :
une pile à combustible (20) configurée pour provoquer une réaction mutuelle entre un gaz combustible et un gaz oxydant afin de générer de l'énergie électrique ;
un générateur d'hydrogène (30) configuré pour mettre en oeuvre un reformage vapeur d'une matière première gazeuse contenant un hydrocarbure gazeux afin de générer un gaz combustible contenant de l'hydrogène ;
une chambre de combustion (40) configurée pour brûler un gaz combustible effluent, déchargé par la pile à combustible (20), afin de chauffer le générateur d'hydrogène (30), la chambre de combustion (40) comportant un brûleur configuré pour émettre une flamme ; et
un détecteur de flamme (80) configuré pour détecter un état de combustion de la chambre de combustion (40) sur base de la conductivité de la flamme afin d'envoyer l'état de combustion au contrôleur (10),
le procédé comprenant :
le contrôle d'une quantité d'énergie électrique générée par la pile à combustible (20) sur base d'un taux de variation cible prédéterminé ;
l'obtention par le détecteur de flamme (80) d'une entrée indiquant une corrélation entre le taux de variation cible et une température du générateur d'hydrogène (30) ;
l'estimation, sur base de l'entrée provenant du détecteur de flamme (80), du fait que la chambre de combustion (40) se trouve ou non dans un état d'extinction de feu ; et
dans le cas où il est estimé que la chambre de combustion (40) se trouve dans l'état d'extinction de feu, l'exécution d'une opération consistant à réduire le taux de variation cible et à commander à la pile à combustible (20) de continuer à générer l'énergie électrique ou une opération consistant à commander à la pile à combustible (20) d'arrêter la génération d'énergie électrique, à réduire le taux de variation cible, et à commander ensuite à la pile à combustible (20) de redémarrer la génération d'énergie électrique.
